## Europäisches Patentamt

(19) **European Patent Office**

**Office européen des brevets**

(11) Numéro de publication: **0 144 336**
**B1**

# (12) FASCICULE DE BREVET EUROPÉEN

(45) Date de publication du fascicule du brevet:
**10.06.87**

(51) Int. Cl.⁴: **G 21 C 7/04,** G 21 C 3/32

(21) Numéro de dépôt: **84901353.7**

(22) Date de dépôt: **19.03.84**

(86) Numéro de dépôt international:
**PCT/FR 84/00069**

(87) Numéro de publication internationale:
**WO 84/03793 (27.09.84 Gazette 84/23)**

(54) **ASSEMBLAGE COMBUSTIBLE A TAUX DE COMBUSTION ELEVE POUR REACTEUR NUCLEAIRE.**

(30) Priorité: **21.03.83 FR 8305078**

(43) Date de publication de la demande:
**19.06.85 Bulletin 85/25**

(45) Mention de la délivrance du brevet:
**10.06.87 Bulletin 87/24**

(84) Etats contractants désignés:
**BE DE GB SE**

(56) Documents cité:
**DE-B-1 273 716**
**FR-A-1 587 354**
**FR-A-2 439 456**
**FR-A-2 518 300**

(73) Titulaire: **URANIUM PECHINEY, Tour Manhattan, La Défense 2, 6, place de l'Iris,, F-92400 Courbevoie (FR)**

(72) Inventeur: **BLUM, Jacques, Marcel, 5, rue Voltaire, F-92300 Levallois (FR)**

(74) Mandataire: **Vanlaer, Marcel, PECHINEY 28, rue de Bonnel, F-69433 Lyon Cédex 3 (FR)**

## Description

L'assemblage combustible qui fait l'objet de l'invention concerne les coeurs des réacteurs nucléaires refroidis à l'eau. Cet assemblage comporte, de façon connue, un ensemble d'éléments combustibles qui sont des tubes de relativement faible diamètre de quelques mètres de longueur unitaire maintenus à l'écartement voulu les uns des autres au moyen de grilles d'espacement. On recherche pour ces réacteurs la possibilité de mettre en oeuvre des combustibles permettant d'atteindre des taux de combuation de plus en plus élevés afin d'espacer le plus possible les périodes d'arrêt pour recharge.

On atteint couramment des taux de combustion de l'ordre de 33 000 MWJ/ tonne de manière fissile et on recherche la possibilité d'atteindre des taux de combustion de l'ordre de 50 000 MWJ/tonne.

Il est connu pour augmenter le taux de combustion appelé aussi "burn up" de faire appel à des combustibles présentant un enrichissement plus élevé et de freiner la trop grande réactivité initiale de ces combustibles en incorporant à la charge des poisons consommables, en plus d'un ajout d'acide borique dana l'eau du circuit primaire. C'est ainsi qu'on utilise par exemple des barres poison contenant certains éléments tels que B, Gd ou Cd qui sont diaposés au sein d'un certain nombre d'assemblages combustibles dans des emplacements réservés pour de telles barres. C'est ainsi qu'un assemblage combustible à pas carré, pour réacteur à eau pressurisée comporte par exemple 17 X 17 emplacements, dans lesquels sont disposés 264 éléments combustibles et 25 tubes de guidage. Il est de pratique courante de loger dans un ou plusieurs de ces tubes de guidage des barres poison, contenant par exemple un verre au bore, qui absorbe l'excès de réactivité présent initialement dans la charge; au fur et à mesure de l'irradiation, la section de capture de ce verre au bore décroît ce qui compense la perte progressive de réactivité de la charge.

L'utilisation de telles barres poison, placées seulement dans quelques emplacements d'un nombre limité d'assemblages combustibles, présente l'inconvénient d'une répartition très hétérogène du poison consommable et donc d'une combustion irrégulière de la matière fissile. On constate, d'une part une trop grande réactivité des éléments combustibles les plus éloignés des barres poison, avec des surchauffes pouvant entraîner des ruptures de gaine et, d'autre part, une réactivité trop faible des r éléments combustibles les plus proches de ces barres poison avec comme conséquence une mauvaise utilisation du combustible.

On a proposé pour remédier à cela d'incorporer le poison consommable au combustible lui-même et c'est ainsi par exemple qu'on peut réaliser des pastilles combustibles à base de UO$_2$ qui contiennent de petites quantités d'oxyde de gadolinium, Gd$_2$O$_3$. En effet l'élément Gd est un poison consommable particulièrement efficace. Cependant cette incorporation de Gd$_2$O$_3$ à UO$_2$, même en petites quantités, modifie les caractéristiques des pastilles frittées et en particulier diminue leur conductivité thermique ce qui rend l'écoulement de la chaleur produite au sein des pastilles plus difficile. On est donc obligé de limiter le taux d'enrichissement de ces pastilles et on doit donc alors utiliser dans le même réacteur d'autres pastilles, contenant seulement de l'UO$_2$ davantage enrichi.

Ces taux d'enrichissement différents sont à nouveau une cause d'hétérogénéité de température de fonctionnement, et aussi d'hétérogénéité dans l'utilisation du combustible. De plus, la présence de Gd$_2$O$_3$ mélangé à UO$_2$ complique sérieusement les problèmes de retraitement des combustibles nucléaires.

On a donc recherché la possibilité de réaliser des assemblages combustibles présentant une répartition particulièrement homogène d'un poison consommable, sans incorporer celui-ci au combustible, et sans se contenter de localiser ce poison consommable dans un très petit nombre d'emplacements réservés, habituellement utilisés pour des dispositifs de contrôle de la réactivité, tels que des barres de contrôle ou d'arrêt, des barres poison ou autres.

Les assemblages combustibles pour réacteurs nucléaires refroidis à l'eau qui font l'objet de l'invention constitués d'éléments combustibles comportent un poison consommable réparti dans un ensemble de fils poison de diamètre au plus égal au rayon des éléments combustibles, la majorité de ces fils poison étant logés dans des espaces disponibles entre les éléments combustibles. Ces fils poison sont de préférence sensiblement rectilignes, et disposés parallèlement à l'axe de l'assemblage combustible, chacun de ces fils traversant au moins deux grilles et étant solidarisé avec elles.

L'axe de chaque fil est de préférence aussi proche que possible du centre du carré formé par un ensemble de quatre logements adjacents d'une grille.

De préférence, les fils poison traversent chaque grille dans un angle d'un logement d'élément combustible et sont solidarisés avec cette grille par un moyen de fixation convenable. Le diamètre de ces fils qui ne dépasse pas sensiblement le rayon des éléments combustibles est en général compris entre 2 et 5 mm et de préférence entre 2 et 4 mm.

De préférence également les fils poison comportent une âme contenant le poison consommable sous forme élémentaire ou sous forme de composé, tel qu'un oxyde, carbure etc.. ou encore sous forme d'alliage métallique. Cette âme est entourée d'une gaine constituée par un métal ou alliage convenant pour l'utilisation prévue, tel qu'un alliage de nickel, un alliage de zirconium, du titane allié ou non allié, un acier inoxydable, ou encore un autre métal ou alliage. La gaine enserre de préférence l'âme, une liaison métallurgique étant avantageusement réalisée entre l'une et l'autre. La description détaillée et les figures ci-après montrent des modes de réalisation non limitatifs des assemblages suivant l'invention.

Figure 1 partie de grille, vue en plan, faisant partie d'un assemblage combustible suivant l'invention.

Figure 2 schéma en élévation d'un assemblage combustible suivant l'invention.

Figure 3 vue en perspective d'un mode de liaison entre un fil poison et des grilles dans un assemblage combustible suivant l'invention.

Figure 4 détail de la figure 3 montrant, vu en coupe, le mode de liaison de l'extrémité du fil poison avec une grille.

Figure 5, vue d'un mode particulier de réalisation d'une patte de fixation d'un fil poison à une grille.

Comme on l'a dit plus haut, on utilise de préférence un fil poison constitué d'une âme, contenant le poison consommable, gainée par un métal ou alliage approprié.

L'âme peut être constituée par l'élément poison lui-même tel que B, Gd, Cd ou encore par des composés tels que $B_4C$, $Gd_2O_3$ ou encore par des alliages métalliques.

On peut utiliser en particulier des alliages AgCd, tel que l'alliage contenant en % en masse Ag 70 - Cd 30 qui est particulièrement ductile se prêtant donc à la réalisation de fils de faible diamètre. La gaine est de préférence réalisée en un métal ou alliage apte à la transformation, résistant à la corrosion par l'eau pressurisée ou bouillante au voisinage de 300°C. On peut utiliser en particulier des alliages à base de zirconium tels que les Zircaloy, du titane ou des alliages à base de titane, des aciers inoxydables, des alliages à base de nickel etc. On utilise de préférence des fils de faible section afin de ne pas faire obstacle de façon notable au passage de l'eau de refroidissement du réacteur. Le diamètre de ces fils doit être au plus égal au rayon des éléments combustibles c'est à dire environ 5 mm. On utilise par exemple un fil poison composite ayant de préférence un diamètre d'âme compris entre 1 et 2,5 mm gainé par une enveloppe d'épaisseur comprise entre 0,1 et 0,4 mm. Le diamètre extérieur du fil est au plus égal au rayon des éléments combustibles et de préférence compris entre 2 et 4 mm.

La liaison entre les fils poison et les grilles peut être réalisée d'un grand nombre de façons.

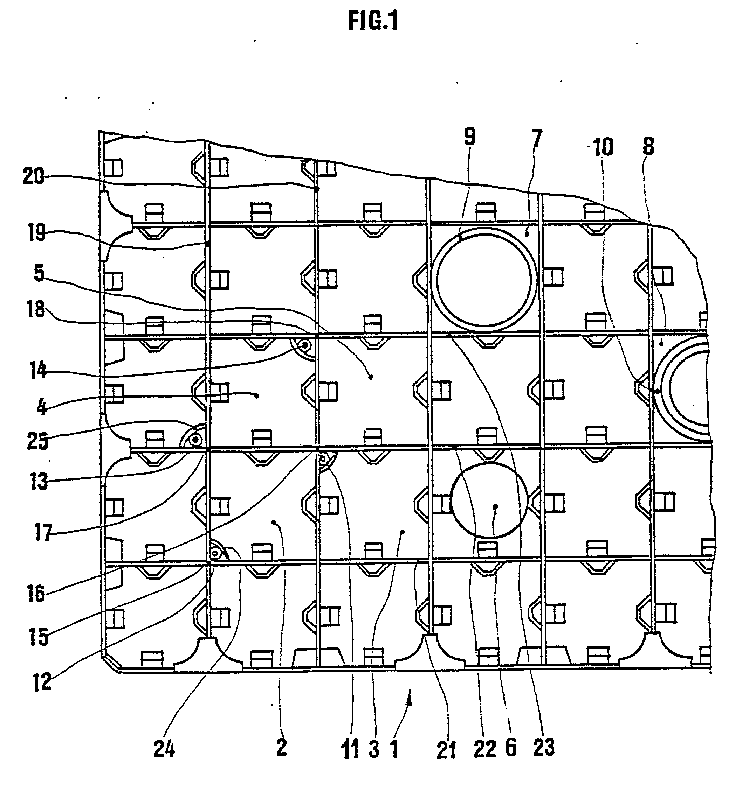

La figure 1 est une vue en plan d'une partie d'une grille 1 du type 17 X 17, c'est à dire comportant 289 emplacements disposés suivant un pas carré, destinée à un assemblage combustible suivant l'invention. Cette grille 1 comporte d'une part 264 emplacements tels que 2, 3, 4, 5, prévus chacun pour le logement d'un élément combustible tel que 6 et d'autre part 25 emplacements tels que 7, 8, contenant chacun un tube de guidage tel que 9, 10 destiné à recevoir des dispositifs de réglage ou autre. Les fils poison tels que 11, 12, 13, 14 sensiblement rectilignes sont orientés parallèlement à l'axe de l'assemblage combustible, c'est à dire perpendiculairement au plan de la figure. On voit qu'ils sont localisés chacun dans un coin d'un des emplacements prévus pour le logement d'un élément combustibls, au voisinage d'un centre tel que 15, 16, 17, 18 du carré formé par quatre logements adjacents.

Dans le cas de la grille représentée, ces centres sont les points de croisement à angle droit de bandes métalliques disposées sur chant, telles que 19, 20 d'une part et 21, 22, 23 d'autre part.

On comprend que grâce à cette disposition on obtient dans le plan de grille une répartition particulièrement homogène du poison consommable et donc du flux de neutrons thermiques en tous points. Grâce au faible diamètre du fil poison le passage libre pour la circulation d'un fluide de refroidissement, généralement de l'eau légère, n'est pas réduit de façon sensible et l'intervalle entre ce fil et la paroi de l'élément combustible le plus proche est suffisant pour éviter toute surchauffe locale.

Dans le cas de la figure 1, si on utilise par exemple des éléments combustibles de 9,5 mm de diamètre extérieur logés dans une grille au pas de 12,6 mm, on voit que, si les bandes ont 0,3 mm d'épaisseur, la paroi d'un fil poison de 2,5 mm de diamètre, placé de façon à tangenter les parois des bandes qui forment le coin dans lequel il est logé, est distante d'au moins 0,83 mm de la paroi de l'élément combustible qui se trouve dans le même logement; la distance croît d'ailleurs très rapidement dès que l'on s'éloigne de la diagonale du logement du combustible.

L'expérience montre qu'une telle distance minimale suffit pour empêcher toute surchauffe locale de la gaine de l'élément combustible le long de la génératrice la plus proche du fil poison.

Pour obtenir ce résultat, il importe que les fils poison soient maintenus en place de façon suffisamment précise et sûre, dans leur coin, par des pattes de fixation telles que 24, 25 dont on décrira plus loin différents modes de fixation.

Dans la pratique, on peut par exemple utiliser comme fil poison un fil à âme enalliage Ag 70 % - Cd 30 % (pour cent en masse) de 2 mm de diamètre comportant une gaine de 0,25 mm d'épaisseur en alliage de zirconium du type Zircaloy 2. Un tel fil peut être réalisé par exemple par co étirage ou colaminage d'un produit de départ constitué d'un tube de zircaloy à l'intérieur duquel est logée une barre d'alliage Ag Cd.

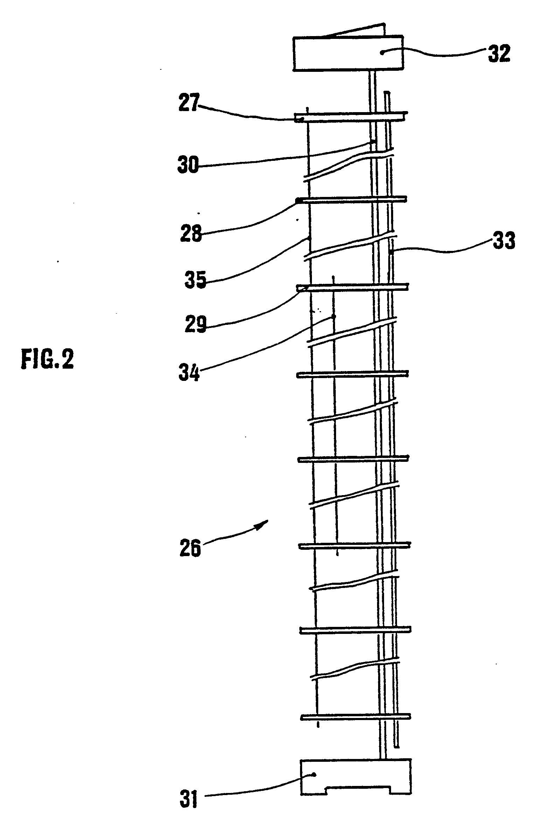

La figure 2 représente de façon schématique un assemblage combustible 26 vue en élévation. Cet assemblage comporte un ensemble de grilles telles que 27, 28, 29 qui sont semblables à la grille 1 de la figure 1. Ces grilles sont maintenues à distance convenable les unes des autres par un ensemble de 25 tubes de guidage tels que 30 qui se raccordent aux deux embouts inférieur 31 et supérieur 32 de façon connue de l'homme de métier. L'assemblage combustible comporte 264 éléments combustibles tels que 33 qui traversent les grilles comme cela est représenté figure 1.

Enfin suivant l'invention, un ensemble de 64 fils poison tels que 34, 35 est disposé dans l'assemblage combustible de la façon décrite plus haut.

On remarque qu'on utilise dans cet assemblage deux dimensions de fils poison: des fils courts d'environ 3 m de longueur tels que 34 et des fils longs d'environ 4 m de longueur tels que 35. Le nombre de chacun de ces fils dépend de l'emplacement qu'occupera l'assemblage dans le réacteur. En effet, il y a intérêt, pour répartir la puissance de façon homogène, à augmenter la quantité de poison consommable contenue dans les assemblages combustibles situés au voisinage de l'axe du coeur du réacteur par rapport à la quantité contenue dans les assemblages situés à la périphérie de ce coeur.

Pour la même raison, on augmente la quantité de poison dans la zone médiane de chaque assemblage par rapport aux deux zones d'extrémités. Ce résultat est obtenu par exemple en utilisant des fils de longueurs différentes. On pourrait aussi utiliser des fils dont la teneur en poison varierait d'une extrémité à l'autre de façon continue ou discontinue suivant des lois bien déterminées.

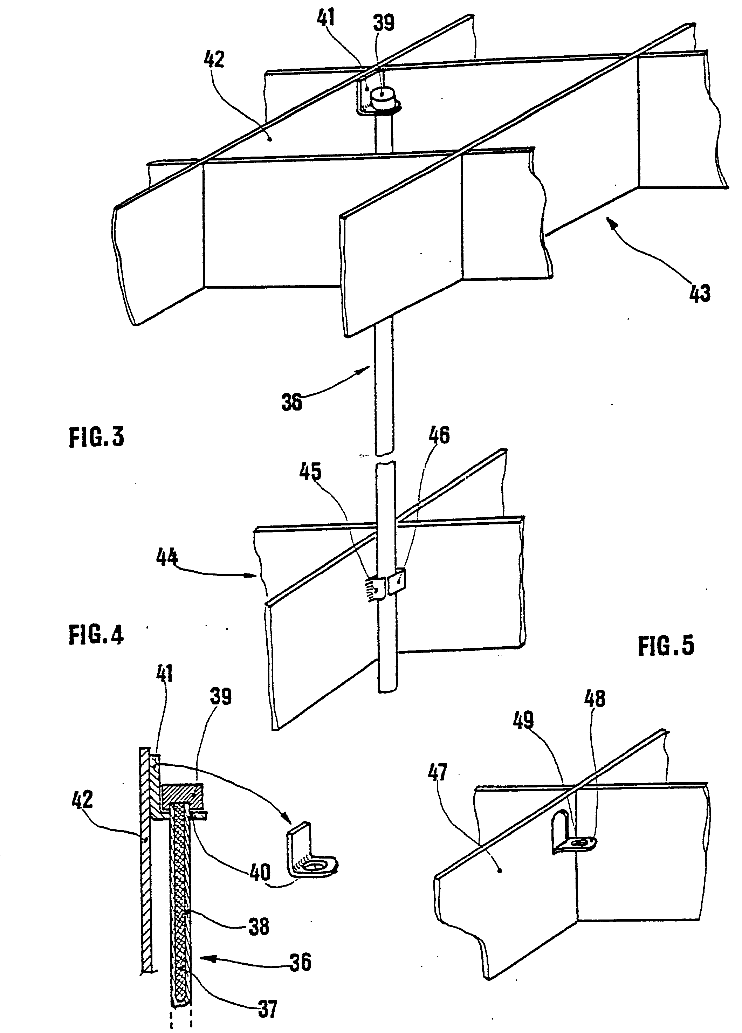

Les figures 3, 4, et 5 représentent des modes de montage et de fixation de ces fils poison dans un assemblage combustible.

Le fil poison 36 comporte une âme 37 en alliage Ag Cd qui est entourée d'une gaine 38 en zircaloy. Ce fil poison est bouché à son extrémité supérieure par un bouchon 39 également en zircaloy qui peut être soudé ou brasé. On voit que ce fil traverse un trou 40 percé dans une patte de fixation 41 qui est elle-même soudée ou brasée à une bande 42 qui fait partie d'une grille 43.

Le fil poison 36 est ainsi solidarisé avec la grille 43 grâce à ce bouchon 39 qui sert de moyen de retenue et évite le glissement du fil poison 36 le long de l'axe de l'assemblage combustible. Le fil poison 36 est maintenu au passage à travers chaque grille, telle que la grille 44 par des languettes de retenue telles que 45, 46 qui sont en général découpées dans la bande. Comme le montre la figure 5, on peut aussi découper dans une bande 47 une patte de fixation 48 qui est pliée à angle droit par rapport au plan de la bande et dans laquelle on perce un trou 49 du diamètre voulu pour qu'il puisse être traversé par un fil poison.

Comme cela a été dit plus haut, le nombre et les dimensions des fils poison dépendent de la quantité de poison consommable qu'on veut loger dans le coeur du réacteur.

Dans le cas par exemple d'assemblages combustibles du type 17 X 17 pour réacteur à eau pressurisée, dans lesquels on se propose de loger sous forme de fil poison par exemple 11,52 kg d'alliage Ag Cd à 30 % en masse de Cd, on peut envisager d'utiliser 64 fils poison d'environ 4 m de long, chaque fil contenant 180 grammes de Ag Cd sous forme d'un fil de 2,4 mm de diamètre entouré d'une gaine en zircaloy de 0,2 mm d'épaisseur. Ce qui équivaut du point de vue absorption des neutrons thermiques à 202 grammes de gadolinium par assemblage combustible. On voit qu'un tel fil sera facilement logé dans les coins des emplacements d'éléments combustibles des grilles.

D'autres éléments poison peuvent être utilisés pour la réalisation de tels fils. Il n'est pas nécessaire que ces fils comportent une âme ductile. L'âme peut en effet être constituée par exemple par un composé sous forme pulvérulente ou granulaire tel qu'un oxyde, un carbure etc. On peut utiliser en particulier du $B_4C$, ou encore du $Gd_2O_3$. De telles poudres peuvent être tassées à l'intérieur d'un tube en zircaloy ou autre métal ou alliage ayant un comportement satisfaisant dans les conditions d'utilisation. Outre les métaux ou alliages déjà cités on peut utiliser aussi pour le gainage du niobium allié ou non allié.

## Revendications

1. Assemblage combustible constutuée d'éléments combustibles à taux de combustion élevée, pour réacteur nucléaire refroidi à l'eau, contenant un poison consommable, caractérisé en ce qu'il comporte un ensemble de fils poison, de diamètre au plus égal au rayon des éléments combustibles, la majorité de ces fils étant logés dans des espaces disponibles entre les éléments combustibles.

2. Assemblage combustible suivant revendication 1 caractérisé en ce que les fils poison ont une structure composite constituée d'une âme qui contient le poison consommable et d'une gaine qui entoure cette âme.

3. Assemblage combustible suivant revendications 2 caractérisé en ce que la gaine enserre l'âme.

4. Assemblage combustible suivant revendication 2 ou 3 caractérisé en ce que l'âme est constituée par une matière pulvérulente ou granulaire, telle qu'un oxyde, un carbure ou un nitrure.

5. Assemblage combustible suivant revendication 2 ou 3, caractérisé en ce que l'âme est constituée par un métal ou alliage métallique homogène.

6. Assemblage combustible suivant revendication 5 caractérisé en ce que l'âme est un alliage Ag Cd.

7. Assemblage combustible suivant l'une des revendications 2 à 6 caractérisé en ce que l'âme a un diamètre compris entre 1 et 2,5 mm.

8. Assemblage combustible suivant l'une des revendications 2 à 7 caractérisé en ce que la gaine est en alliage de zirconium, ou en titane ou alliage à base de titane, ou en acier inoxydable ou en alliage à base de nickel ou en niobium ou alliage à base de niobium.

9. Assemblage combustible suivant l'une des revendications 2 à 8 caractérisé en ce que la gaine a une épaisseur comprise entre 0,1 et 0,4 mm.

10. Assemblage combustible suivant l'une des revendications 1 à 9 caractérisé en ce que le diamètre extérieur du fil poison est compris entre 2 et 5 mm et de préférence entre 2 et 4 mm.

11. Assemblage combustible suivant l'une des revendications 1 à 10 caractérisé en ce que les fils poison sont sensiblement rectilignes, disposés parallèlement à l'axe de l'assemblage, chaque fil poison étant solidarisé avec au moins deux grilles d'espacement par un moyen de fixation.

12. Assemblage combustible suivant l'une des revendications 1 à 11, caractérisé en ce que l'axe de chaque fil poison est aussi proche que possible du centre du carré formé par un ensemble de quatre logements adjacents d'une grille d'espacement.

## Patentansprüche

1. Brennelementkassette, bestehend aus Brennstoffelementen mit hohem Abbrennsatz für wassergekühlte Kernreaktoren mit einem verbrauchbaren Reaktorgift,
gekennzeichnet durch
eine Gruppe von Reaktorgift-Strängen, deren Durchmesser höchstens gleichgroß dem Radius der Brennelemente ist, wobei die meisten dieser Stränge in den zwischen den Brennelementen verfügbaren Zwischenräumen angeordnet sind.

2. Brennelementkassette nach Anspruch 1, dadurch gekennzeichnet, daß die Reaktorgift-Stränge eine zusammengesetzte Struktur aufweisen, die aus einer Seele besteht, die das verbrauchbare Reaktorgift aufweist und einer Schutzhüle, die diese Seele umhüllt.

3. Brennelementkassette nach Anspruch 2, dadurch gekennzeichnet, daß die Schutzhülle die Seele umspannt.

4. Brennelementkassette nach Anspruch 2 oder 3, dadurch gekennzeichnet, daß die Seele aus pulverförmigem oder granulatförmigem Material, wie einem Oxid, Carbid oder Nitrid besteht.

5. Brennelementkassette nach Anspruch 2 oder 3, dadurch gekennzeichnet, daß die Seele aus einem Metall oder einer homogenen Metallegierung besteht.

6. Brennelementkassette nach Anspruch 5, dadurch gekennzeichnet, daß die Seele eine AgCd-Legierung ist.

7. Brennelementkassette nach einem der Ansprüche 2 bis 6, dadurch gekennzeichnet, daß die Seele einen Durchmesser zwischen 1 und 2,5 mm aufweist.

8. Brennelementkassette nach einem der Ansprüche 2 bis 7, dadurch gekennzeichnet, daß die Schutzhülle aus einer Zirkonlegierung, oder aus Titan oder einer Titanlegierung oder aus nichtrostendem Stahl oder einer Legierung auf Nickelbasis oder aus Niob oder einer Legierung auf Niobbasis besteht.

9. Brennelementkassette nach einem der Ansprüche 2 bis 8, dadurch gekennzeichnet, daß die Schutzhülle eine Dicke zwischen 0,1 und 0,4 mm hat.

10. Brennelementkassette nach einem der Ansprüche 1 bis 9, dadurch gekennzeichnet, daß der Außendurchmesser des Reaktorgift-Strangs zwischen 2 und 5 mm, vorzugsweise zwischen 2 und 4 mm, beträgt.

11. Brennelementkassette nach einem der Ansprüche 1 bis 10, dadurch gekennzeichnet, daß die Reaktorgift-Stränge im wesentlichen gradlinig sind und parallel zur Achse der Brennelementkassette angeordnet sind, wobei jeder Reaktorgift-Strang an mindestens zwei Beabstandungsgittern mittels einer Befestigung befestigt ist.

12. Brennelementkassette nach einem der Ansprüche 1 bis 11, dadurch gekennzeichnet, daß die Achse eines jedes Reaktorgift-Strangs so dicht wie möglich an der Mitte des Rechtecks angeordnet ist, das durch eine Gruppe von vier benachbarten Lagersitzen eines Beabstandungsgitters gebildet wird.

## Claims

1. A fuel assembly formed by fuel elements having a high combustion rate, for a watercooled nuclear reactor, containing a consumable pioson, characterised in that it comprises an array of pioson wires, which are of a diameter at most equal to the radius of the fuel elements, the majority of said wires being housed in spaces available between the fuel elements.

2. A fuel assembly according to claim 1 characterised in that the poison wires have a composite structure comprising a core which contains the consumable poison and a sheath which surrounding said core.

3. A fuel assembly according to claim 2 characterised in that the sheath grips the core.

4. A fuel assembly according to claim 2 or claim 3 characterised in that the core comprises a powder or granular material such as an oxide, a carbide or a nitride.

5. A fuel assembly according to claim 2 or claim 3 characterised in that the core comprises a metal or homogeneous metal alloy.

6. A fuel assembly according to claim 5 characterised in that the core is an Ag-Cd alloy.

7. A fuel assembly according to one of claims 2 to 6 characterised in that the diameter of the core is between 1 and 2.5 mm.

8. A fuel assembly according to one of claims 2 to 7 characterised in that the sheath comprises zirconium alloy, or titanium or titanium-base alloy, or a stainless steel, or a nickel-base alloy, or niobium, or niobium-base alloy.

9. A fuel assembly according to one of claims 2 to 8 characterised in that the sheath is of a thickness of between 0.1 and 0.4 mm.

**0 144 336**

10. A fuel assembly according to one of claims 1 to 9 characterised in that the outside diameter of the poison wire is between 2 and 5 mm and preferably between 2 and 4 mm.

11. A fuel assembly according to one of claims 1 to 10 characterised in that the poison wires are substantially rectilinear and are dispossed parallel to the axis of the assembly, each poison wire being fixed with respect to at least two spacer grids by a fixing means.

12. A fuel assembly according to one of claims 1 to 11 characterised in that the axis of each poison wire is as close as possible to the centre of the square formed by an array of four adjacent housings of a spacer grid.

# FIG.1

**FIG.2**

41 39

42

43

36

**FIG.3**

45 46

44

**FIG.4**

**FIG.5**

41

39

42

40

38

36

37

47 49 48

5